# FASCICULE DE BREVET EUROPEEN

(11) **EP 1 916 744 B1**
(45) Date de publication et mention de la délivrance du brevet: **03.07.2019**
(21) Numéro de dépôt: 07360056.1
(22) Date de dépôt: 25.10.2007
(51) Int. Cl.: H01R 9/26, H01R 9/24, H02B 1/20

(54) **Dispositif de pontage à deux niveaux de raccordement permettant la connexion de becs de repiquage**
Vorrichtung zur Brückenbildung auf zwei Verbindungshöhen, die eine Verbindung zwischen Abzweigungsanschlüssen ermöglicht
Bridging device with two connection levels allowing the connection of derivation terminals

(30) Priorité: 27.10.2006 FR 0609452
(43) Date de publication de la demande: 30.04.2008
(73) Titulaire: HAGER-ELECTRO SAS, 67210 Obernai (FR)
(72) Inventeur: Houdé, Claude, 67210 Bernardswiller (FR)
(74) Mandataire: Nuss, Laurent

(56) Documents cités:
- EP-A- 1 137 034
- EP-A1- 0 359 677
- EP-A1- 0 359 678
- EP-A1- 0 812 032

## Description

La présente invention relève du domaine des appareils modulaires électriques, et elle concerne plus particulièrement les barres rigides de raccordement munies de dents de connexion régulièrement espacées. Ces barres sont également appelées barres de pontage, ou encore peignes de pontage.

Elles sont utilisées notamment dans des tableaux ou armoires de distribution comportant des rails parallèles normalisés sur lesquels sont fixés lesdits appareils modulaires, qui y sont juxtaposés.

L'alimentation des différents appareils s'effectue à l'aide desdits peignes ou barres de pontage, qui en simplifient la connexion. La liaison étant rigide, elle ne permet des raccordements que sur les appareils disposés sur la même rangée, c'est-à-dire fixés au même rail.

Il arrive cependant fréquemment que des connexions entre des appareils disposés sur deux rails contigus doivent être réalisées. Dans ce cas, les peignes de pontage ne sont d'aucune utilité. Une telle connexion nécessite un repiquage du signal par exemple au niveau de la borne d'entrée d'un appareil d'une rangée, repiquage qui peut se faire par connexion directe notamment à l'aide d'un fil conducteur souple dont les deux extrémités sont raccordées à la borne respectivement d'un appareil d'une rangée initiale et d'un appareil d'une seconde rangée.

Ce repiquage peut cependant également être effectué à l'aide d'un dispositif de raccordement spécifique, appelé bec de repiquage, généralement constitué d'une borne à cage et vis munie d'une languette conductrice elle-même raccordée au connecteur d'un appareil modulaire d'une des rangées. Une liaison par fil souple est alors généralement établie avec un second bec de repiquage connecté à un appareil de la seconde rangée. C'est dans cette hypothèse que se situe l'invention, hypothèse dans laquelle les connecteurs des appareils modulaires réalisent en fait un double serrage de deux éléments distincts : l'extrémité de la languette conductrice du bec de repiquage d'une part, et la dent de la barre de pontage d'autre part.

La double connexion n'est cependant possible que lorsque le dispositif de pontage le permet, et notamment la structure ou le positionnement de l'enveloppe isolante qui entoure dans la plupart des cas la ou les barres axiales. Cette enveloppe bloque en effet souvent l'accès aux connecteurs de raccordement des appareils modulaires, et ne permet pas l'insertion ultérieure d'un conducteur de liaison ou d'une languette de raccordement d'un bec de repiquage. Dans ce cas, il faut que l'extension à une rangée supplémentaire ait été prévue dès le début, faute de quoi il faut desserrer tous les dispositifs de raccordement des appareils de la rangée initiale pour enlever le dispositif de pontage et réaliser ladite insertion, avant de resserrer les connecteurs. Cela n'est évidemment guère confortable pour un monteur électricien opérant dans une armoire de distribution, et donc peu envisageable.

Le problème se pose avec plus d'acuité encore lorsque la barre de pontage présente deux niveaux de raccordement, respectivement pour le neutre et au moins une phase. Le volume de l'enveloppe isolante est alors tel qu'il recouvre les faces des appareils dans lesquelles débouchent les orifices des connecteurs, et l'enveloppe doit alors elle-même présenter des orifices permettant un raccordement des becs de repiquage à travers ladite enveloppe. Les languettes de ces becs doivent en fait traverser ladite enveloppe en direction des connecteurs des appareils modulaires.

Lorsque les niveaux de pontage sont proches, ou lorsqu'il y a plus d'une barre de phase, le positionnement relatif desdites barres doit permettre aux languettes des becs de repiquage de traverser le volume de l'enveloppe en assurant le contact avec une unique barre de pontage, et en isolant ladite languette des autres barres de pontage.

L'objectif de la présente invention est de proposer une structure d'enveloppe et des configurations de peignes de pontage tels qu'ils permettent de satisfaire ce double critère.

A cet effet, l'invention concerne, comme mentionné, un dispositif de pontage à deux niveaux de raccordement, un premier niveau pour des lamelles issues d'une barre conductrice continue raccordée au neutre, et un second niveau pour des lamelles issues de n (n= 1 à 3) barres de phase continues dotées de lamelles à fréquence spatiale n fois moindre que celle des lamelles neutre et se succédant selon un motif régulier. Lesdites barres et leurs lamelles forment des peignes de connexion distincts fixés dans une enveloppe isolante munie d'une face dont dépassent les lamelles sur deux lignes parallèles constituant lesdits niveaux de raccordement. La longueur des lamelles des peignes, la configuration de ces derniers et leurs moyens de positionnement/isolation relatifs dans l'enveloppe sont prévus pour que les portions des lamelles dépassant de l'enveloppe isolante soient d'égale longueur, les lamelles des deux niveaux de pontage étant distantes d'un même pas et décalées.

Une telle configuration est divulguée par exemple dans EP-1 137 034, qui décrit de plus qu'au moins les lamelles des peignes de phase sont déportées latéralement par rapport aux barres, ménageant entre elles des espaces libres à la manière d'un crénelage.

Le dispositif de l'invention se caractérise à titre principal en ce que :
- une face de l'enveloppe isolante distincte de celle dont dépassent les lamelles comporte des orifices d'insertion et de guidage de la languette de connexion d'un bec de repiquage à raison d'au moins un orifice par phase et d'au moins un orifice pour le neutre, donnant accès au peigne correspondant et situé pour chaque phase ou le neutre au niveau d'espaces libres du crénelage des autres phases ou du neutre ; et
- les moyens de positionnement des peignes dans l'enveloppe présentent des moyens de passage/guidage des languettes des becs de repiquage permettant de les mettre en contact avec une phase ou le neutre et de les isoler par rapport aux autre phase ou au neutre.

La configuration des peignes de pontage est prévue pour permettre un accès aux lamelles, de l'extérieur, pour les languettes des becs de repiquage. Il en va de même des moyens de positionnement desdits peignes dans l'enveloppe, qui doivent à la fois assurer une fonction de maintien en position des barres, et également permettre une isolation relative par rapport d'une part aux autres barres et d'autre part auxdites languettes. Le tout doit s'accommoder de l'exigence essentielle de positionnement des lamelles des barres de phase sur un même niveau.

Selon l'invention, les orifices sont positionnés de manière à guider la languette au contact d'une lamelle respectivement d'un peigne de phase ou du peigne de neutre.

En d'autres termes, chaque orifice est positionné et dimensionné de façon à rendre plus facile l'insertion de la languette du bec de repiquage d'une part, et son positionnement en contact avec la lamelle d'un peigne d'autre part.

Plus précisément, ces orifices sont localisés et dimensionnés de manière à guider la languette en coulissement sur une lamelle en vue d'un positionnement final superposé.

Lorsque les languettes des becs de repiquage sont en position finale d'insertion, leur extrémité libre doit dépasser du dispositif de pontage sensiblement de la même longueur que les lamelles des barres de phase ou de neutre. Pour que la connexion dans les dispositifs de raccordement des appareils modulaires puissent se faire dans des bonnes conditions, les lamelles et languettes sont alors superposées, au contact l'une de l'autre.

Le dispositif de pontage de l'invention peut comporter des orifices d'insertion et de guidage localisés aux deux niveaux de raccordements, distants d'un pas identique à celui dont les lamelles sont distantes, et décalés d'une distance identique au décalage des lamelles des deux niveaux de raccordement.

Plusieurs possibilités de connexion de becs de repiquage sont alors proposées pour chaque phase (un marquage les identifiant est cependant nécessaire) et pour le neutre.

Selon une configuration préférentielle, les peignes de pontage ont une section en L au niveau des lamelles, chaque lamelle étant reliée à la barre par une base en L de largeur supérieure à la lamelle dont la portion parallèle à la barre forme avec celle-ci un crénelage.

Cette géométrie des peignes s'explique notamment par le souci de permettre la traversée de l'enveloppe isolante par les languettes des becs de repiquage. Un seul contact électrique est autorisé, avec un seul peigne et au niveau d'une seule lamelle.

Dans cette optique, les moyens de positionnement des peignes de phase et de neutre internes à l'enveloppe isolante comportent, au moins pour une phase ou le neutre, au moins une fenêtre ou un logement de guidage permettant l'accès chacun à une lamelle.

Il s'agit en fait d'orifices, logements ou canaux disposés à l'intérieur de l'enveloppe isolante, et qui permettent, sur le trajet entre les orifices d'entrée et sortie, de guider les languettes pour qu'elles viennent, en sortie, coulisser par glissement au contact d'une lamelle d'un des peignes de pontage.

Par ailleurs, au moins un créneau d'au moins un peigne d'une des phases ou d'une autre est muni d'une fenêtre de guidage de ce type. L'existence de passages dans les moyens de positionnement/isolation internes à l'enveloppe ne suffit en effet pas toujours à garantir un cheminement continu aux languettes : selon, le positionnement du peigne de pontage dans l'enveloppe, il peut être nécessaire de libérer une portion du trajet en pratiquant un orifice dans un créneau, à un emplacement tel qu'il puisse guider le coulissement languette / lamelle.

Le dispositif de pontage de l'invention, comportant les caractéristiques géométriques et configurationnelles mentionnées auparavant, s'applique notamment bien à une barre triphasée/neutre, dans laquelle :
- les trois peignes de phase sont en L en section ;
- deux des barres sont disposées d'un côté du plan des lamelles ; et
- la troisième barre est disposée de l'autre côté dudit plan.

L'invention va maintenant être décrite plus en détail, au moyen des figures annexées pour lesquelles :
- la figure 1 est une vue en perspective d'un ensemble d'appareillages modulaires constituant une rangée, avec une barre de pontage triphasée/neutre et des becs de repiquage, ces trois éléments étant dissociés ;
- la figure 2 comporte les mêmes éléments que la figure 1 en position assemblée ;
- la figure 3a montre une perspective éclatée d'un dispositif de pontage selon l'invention ;
- la figure 3b représente schématiquement le positionnement relatif des barres de phase ;
- la figure 4 montre schématiquement, en vue de face, ledit positionnement relatif aboutissant à un niveau de pontage unique pour les trois phases ;
- la figure 5 est une vue en perspective d'un dispositif de montage selon l'invention, dans lequel sont enfichés deux becs de repiquage ;
- la figure 6 représente une coupe selon la ligne VI-VI de la figure 5 ; et
- la figure 7 montre en perspective une coupe d'un dispositif de pontage selon l'invention, dans lequel est enfiché un bec de repiquage, l'ensemble étant connecté à une rangée d'appareils modulaires.

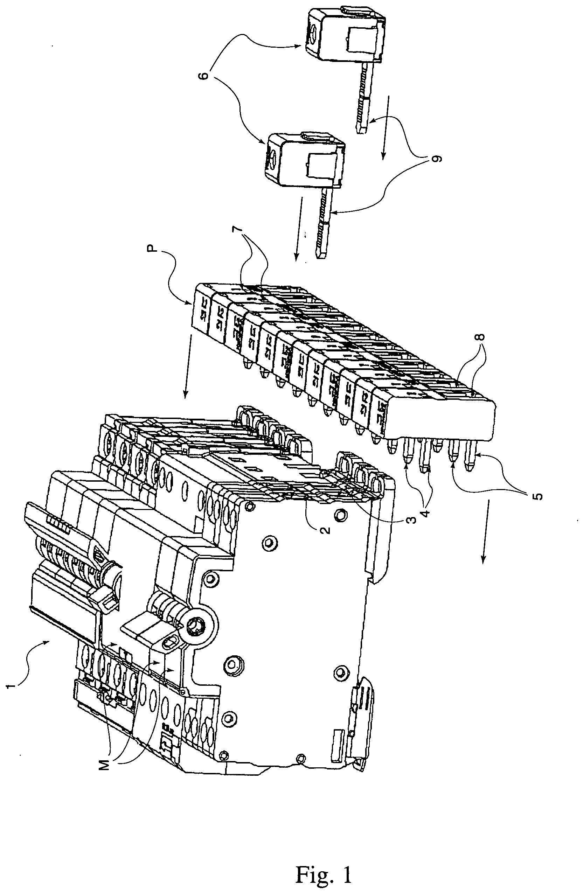

En référence à la figure 1, la rangée 1 est composée d'appareils modulaires (M) dotés de dispositifs de connexion ou connecteurs (2, 3) disposés sur deux niveaux de raccordement. Une barre de pontage (P) comporte des lamelles (4, 5) respectivement de phase et de neutre espacées d'un pas identique, et décalées de façon à correspondre au décalage des dispositifs de raccordement (2, 3) des deux niveaux de pontage des appareils modulaires (M). Des becs de repiquage (6) prévus pour être insérés dans ladite barre de pontage (P) apparaissent sur le côté droit de la figure 1. L'exemple représenté concerne un dispositif de pontage (P) triphasé/neutre. En d'autres termes, les lamelles (4) sont en réalité issues de trois peignes de pontage de phase différents, alors que les lamelles (5) appartiennent un unique peigne de neutre.

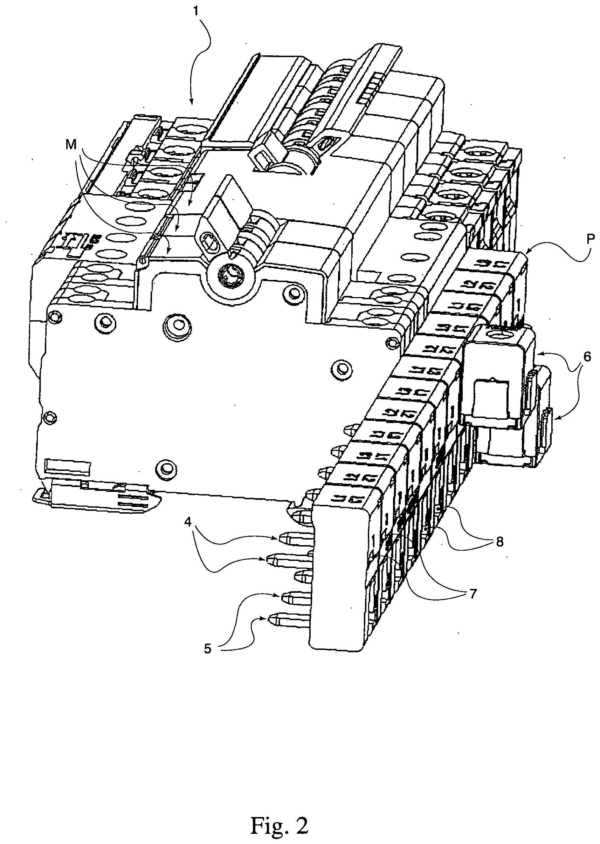

La figure 2 montre les éléments de la figure 1 en position assemblée. Ainsi, les becs de repiquage (6) sont enfichés dans des orifices (7, 8) permettant respectivement de repiquer une phase ou le neutre.

Pour que ce repiquage puisse se faire dans de bonnes conditions, c'est-à-dire pour que le contact électrique soit correctement assuré, les languettes (9) dépassant des becs de repiquage (6) traversent en totalité le dispositif de pontage (P) et sont au contact des lamelles (4, 5) sur toute leur longueur.

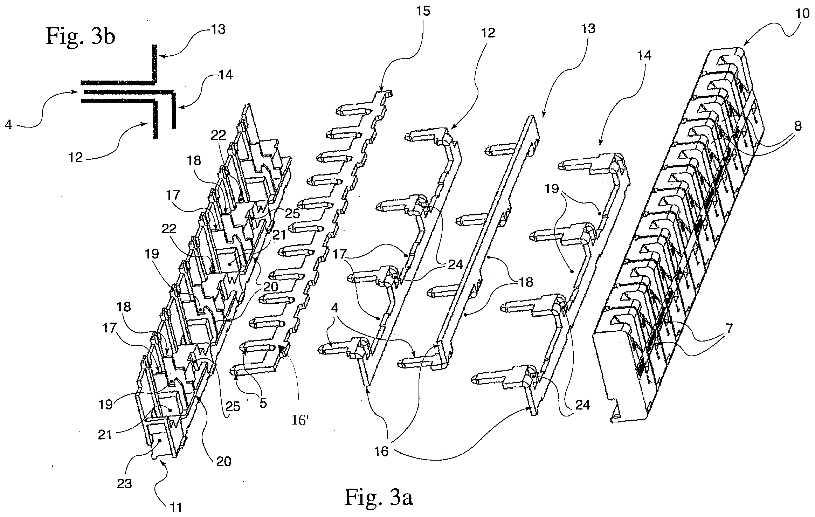

La figure 3 montre la structure précise du dispositif de pontage (P). Celui-ci comporte une enveloppe isolante constituée de deux demi-coques (10, 11) à l'intérieur de laquelle sont positionnés trois peignes de phase (12, 13, 14) et un peigne de neutre (15). Les peignes de phase présentent, au niveau des lamelles (4), une section en L. Ces lamelles (4) et leur base de plus grand épaisseur réalisent d'ailleurs un crénelage par rapport à la barre axiale ou longrine (16) de chaque peigne de phase (12, 13, 14). En d'autres termes, des découpes (17, 18, 19) apparaissent entre lesdites lamelles, lesquelles présentent une périodicité identique, en l'espèce trois fois moindre que la périodicité des lamelles (5) du peigne de neutre (15). Les trois barres de pontage (12, 13, 14) de phase sont agencées à l'aide de moyens de positionnement constituant des reliefs issus de moulage dans les demi-coques (10 et 11) (formant rainures, nervures, murets supports, etc) avec un décalage tel que les lamelles (4), toutes situées au même niveau, présentent entre elles un pas égal au pas séparant les lamelles (5) raccordées à la barre (16') du peigne de pontage (15) du neutre.

La figure 3b montre schématiquement leur positionnement relatif, en section. Deux des trois peignes (12 et 14) sont orientés de telle sorte que leur longrine (16) soit en bas, alors que le troisième (13) comporte une longrine orientée vers le haut. Cette dernière se positionne au contact de nervures transversales (17, 18) prévues dans la demi-coque (11), et notamment dans des encoches (19) permettant son maintien transversal. Les lamelles (4) du peigne (13) sont disposées chacune entre deux nervures successives (17 et 18).

La longrine (16) du peigne (14) est logée sous les murets protubérants axiaux (20), et ses lamelles (4) insérées dans des logements (21) délimités par des parois transversales de la demi-coque (11) et débouchant en façade de celle-ci par des orifices (22).

Enfin, le peigne (12) est disposé dans une gorge (23) s'ouvrant vers le bas dans cette figure, et présentant à intervalle régulier (pas trois fois moindre que celui des lamelles (5)) un orifice de guidage (25).

Les lamelles (4) des peignes (12, 13, 14) n'ont pas la même longueur, car le positionnement relatif de leurs longrines (16) à l'intérieur de l'enveloppe isolante (10,11) est décalé dans la direction transversale, mais la longueur de dépassement desdites lamelles doit être identique. C'est ce qui est schématisé en figure 3b.

Le positionnement relatif des différents peignes de pontage (12, 13, 14) de phase, ainsi que l'existence du crénelage (17, 18, 19) permet de libérer l'accès aux languettes (9) des becs de repiquage (6), qui peuvent coulisser au contact d'une lamelle (4) après guidage à l'intérieur de l'enveloppe isolante, guidage auquel participent aussi des orifices (24) respectivement pratiqués dans les créneaux des peignes (12, 14).

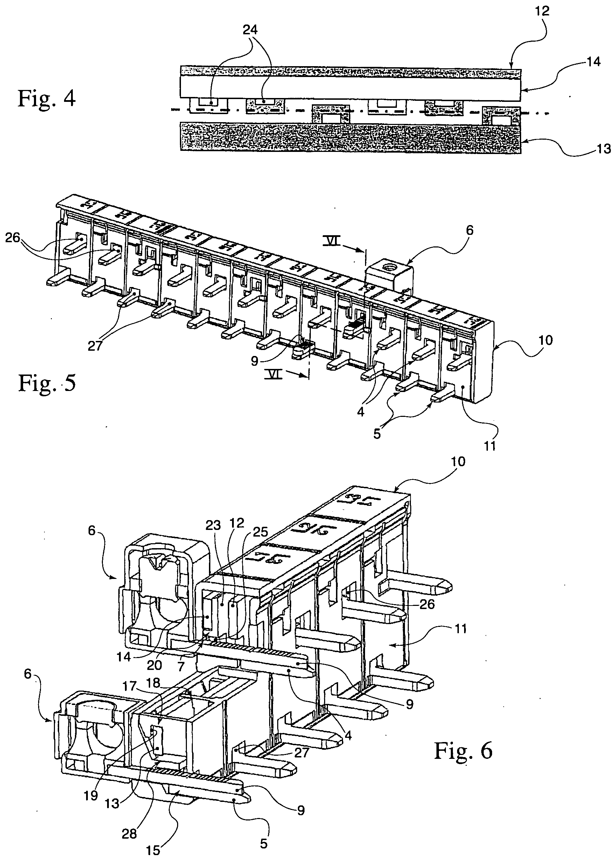

La figure 4 montre le positionnement relatif des trois peignes (12, 13, 14) des phase, également de manière schématique, sans les moyens de positionnement/isolation de l'enveloppe, et sous un autre angle. Les orifices (7) apparaissant dans la demi-coque (10) de l'enveloppe doivent être dans l'alignement des orifices (24) pratiqués dans les créneaux des peignes de pontage (12 et 14). Ces orifices (7) débouchent par ailleurs aussi entre deux parois d'un logement (21), ou entre les deux nervures (17, 18), ou encore au niveau d'un des orifices (25), selon la phase à laquelle le bec de repiquage (6) est raccordé.

Le dispositif de pontage de la figure 5 fait figurer les orifices de sortie (26, 27), pratiqués dans la demi-coque (11), permettant aux lamelles (4, 5) et aux languettes (9) des becs de repiquage de sortir en direction des moyens de connexion d'entrée des appareils modulaires. Ces orifices (26, 27), respectivement prévus pour les peignes de pontage de phase (12, 13, 14) et de neutre (15), sont prévus suffisamment grands pour permettre le passage à la fois d'une lamelle (4, 5) et d'une languette (9) superposée, comme cela est montré au niveau du trait de coupe VI-VI.

Le résultat de cette coupe VI-VI apparaît en figure 6, qui montre de surcroît un peu plus précisément comment les deux demi-coques (10, 11) une fois assemblées, assurent le positionnement, l'isolation des peignes (12, 13, 14, 15), des lamelles (4, 5) et des languettes (6), ainsi que le guidage de ces dernières.

Ainsi, le peigne (14) est fermement maintenu entre la demi-coque (10), le muret (20) et la paroi dont il dépasse. Le peigne (12), dans sa gorge (23), est maintenu en position par des nervures dépassant des parois longitudinales de ladite gorge (23) (non visibles).

Enfin, le peigne (13), maintenu d'une part par les nervures (17, 18) et les encoches (19), est également positionné au contact d'un muret (28) d'une seule pièce avec la demi-coque (10) et qui délimite dans l'enveloppe isolante un compartiment spécifique pour le peigne de pontage neutre (15) et les languettes (9) des becs de repiquage (6) qui y sont associées.

Le bec de repiquage (6) supérieur, qui coopère avec des lamelles (4) d'un peigne de phase, en l'occurrence le peigne (12), est en fait guidé, le long de son trajet d'enfichage, respectivement par un orifice (7) pratiqué dans la demi-coque (10), l'orifice (25) pratiqué dans une paroi longitudinale de la gorge (23), et l'orifice de sortie (26). Ce guidage lui permet de coulisser au contact d'une lamelle (4) du peigne (12). Cette figure montre que la longueur des languettes (9) leur permet, une fois enfichées, de dépasser de la demi-coque (11) d'une distance similaire à celle dont dépassent les lamelles (4, 5).

Les becs de repiquage (6) enfichés au contact d'une lamelle (4) d'un autre peigne de phase sont guidés d'une manière analogue, en utilisant les autres reliefs/orifices mentionnés ci-dessus.

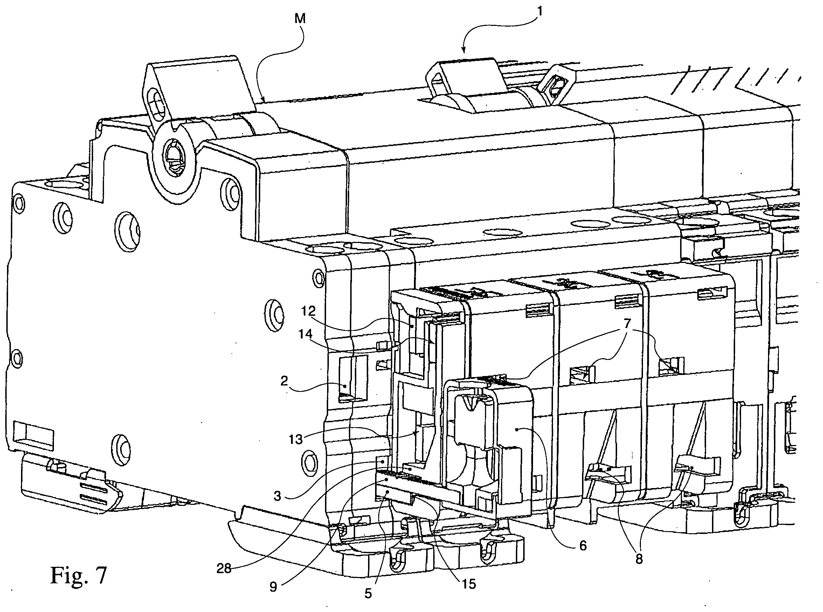

La figure 7 permet de voir, suivant une coupe du dispositif de pontage (P), l'enfichage simultané dudit dispositif (P) et d'un bec de repiquage (6) dans un connecteur d'appareil modulaire (M). Cette figure montre bien que les orifices d'entrée (7, 8) du dispositif (P) sont bien situés au même niveau que les orifices d'entrée (2, 3) des moyens de connexion des appareils (M).

Lorsque le bec de repiquage (6) est complètement enfiché, la languette (9) pénètre, au même titre que la lamelle (5), dans un orifice (3) d'un connecteur d'entrée du neutre.

Les trois orifices (7) représentés correspondent respectivement à trois phases. Sur le trajet d'enfichage d'une languette (9), le seul contact autorisé est celui avec le peigne (12, 13, 14) de la phase qui correspond au branchement à l'appareil (M) en aval. Le crénelage par exemple visible en figure 3a, ainsi que l'existence des moyens de positionnement/isolation internes à l'enveloppe isolante permet un guidage immédiat et sûr vers une lamelle (4) d'un des peignes de pontage de phase, et une isolation par rapport aux deux autres peignes.

## Revendications

1. Dispositif de pontage à deux niveaux de raccordement, un premier niveau pour des lamelles (5) issues d'une barre conductrice (16') continue raccordée au neutre, et un second niveau pour des lamelles (4) issues de n, n étant un nombre entier naturel compris entre 1 et 3, barres de phase (16) continues dotées de lamelles (4) à fréquence spatiale n fois moindre que celle des lamelles (5) neutre et se succédant selon un motif régulier, lesdites barres (16, 16') et leurs lamelles (4, 5) formant des peignes de connexion (12, 13, 14, 15) distincts fixés dans une enveloppe isolante munie d'une face dont dépassent les lamelles (4, 5) sur deux lignes parallèles constituant lesdits niveaux de raccordement, la longueur des lamelles (4, 5) des peignes (12, 13, 14, 15), la configuration de ces derniers et leurs moyens de positionnement/isolation relatifs dans l'enveloppe étant prévus pour que les portions des lamelles (4, 5) dépassant de l'enveloppe isolante soient d'égale longueur, les lamelles (4, 5) des deux niveaux de pontage étant distantes d'un même pas et décalées, au moins les lamelles (4) des peignes de phase (12, 13, 14) étant déportées latéralement par rapport aux barres (16), ménageant entre elles des espaces libres (17, 18, 19) à la manière d'un crénelage,
**caractérisé en ce que** :
• une face de l'enveloppe isolante distincte de celle dont dépassent les lamelles (4, 5) comporte des orifices d'insertion (7, 8) et de guidage d'une languette (9) de connexion d'un bec de repiquage (6) à raison d'au moins un orifice (7) par phase et d'au moins un orifice (8) pour le neutre, donnant accès au peigne (12, 13, 14, 15) correspondant et situé pour chaque phase ou le neutre au niveau d'espaces libres (17, 18, 19) du crénelage des autres phases ou du neutre ; et
• les moyens de positionnement des peignes (12, 13, 14, 15) dans l'enveloppe présentent des moyens de passage/guidage (21, 24, 25) des languettes (9) des becs de repiquage (6) permettant de les mettre en contact avec une phase ou le neutre et de les isoler par rapport aux autres phases ou au neutre.

2. Dispositif de pontage selon la revendication précédente, **caractérisé en ce que** les orifices (7, 8) sont positionnés de manière à guider la languette au contact d'une lamelle (4, 5) d'un peigne de phase (12, 13, 14) ou du peigne de neutre (15).

3. Dispositif de pontage selon la revendication précédente, **caractérisé en ce que** les orifices (7, 8) sont localisés et dimensionnés de manière à guider la languette (9) en coulissement sur une lamelle (4, 5) en vue d'un positionnement final superposé.

4. Dispositif de pontage selon l'une quelconque des revendications précédentes, **caractérisé en ce qu'**il comporte des orifices (7, 8) d'insertion et de guidage localisés aux deux niveaux de raccordements, distants d'un pas identique à celui dont les lamelles (4, 5) sont distantes, et décalés d'une distance identique au décalage des lamelles (4, 5) des deux niveaux de raccordement.

5. Dispositif de pontage selon l'une quelconque des revendications précédentes, **caractérisé en ce que** les peignes de pontage (12, 13, 14) ont une section en L au niveau des lamelles (4), chaque lamelle (4) étant reliée à la barre (16) par une base en L de largeur supérieure à la lamelle (4) dont la portion parallèle à la barre forme avec celle-ci un crénelage.

6. Dispositif de pontage selon l'une quelconque des revendications précédentes, **caractérisé en ce que** les moyens de positionnement des peignes de phase (12, 13, 14) et de neutre (15) comportent, au moins pour une phase ou le neutre, au moins une fenêtre (25) ou un logement (21) de guidage permettant l'accès chacun à une lamelle (4).

7. Dispositif de pontage selon l'une des revendications 5 et 6, **caractérisé en ce que** au moins un créneau d'au moins un peigne (12, 14) d'une des phases ou du neutre est muni d'une fenêtre (24) de guidage de la languette (9) d'un bec de repiquage (6).

8. Dispositif de pontage selon les revendications 5 à 7 appliquées à une barre triphasée neutre, **caractérisé en ce que** :
- les trois peignes de phases (12, 13, 14) sont en L en section ;
- deux des barres (16) sont disposées d'un côté du plan des lamelles (4) ;
- la troisième barre (16) est disposée de l'autre côté dudit plan.

## Patentansprüche

1. Überbrückungsvorrichtung mit zwei Verbindungsebenen, einer ersten Ebene für Lamellen (5) aus einer mit dem Neutralleiter verbundenen durchgehenden Stromschiene (16') und einer zweiten Ebene für Lamellen (4) aus n, wobei n eine natürliche Zahl zwischen 1 und 3 ist, kontinuierlichen Phasenschienen (16), die mit Lamellen (4) versehen sind, die eine Raumfrequenz n-mal niedriger als die der neutralen Lamellen (5) aufweisen und in einem regelmäßigen Muster aufeinander folgen, wobei die Schienen (16, 16') und ihre Lamellen (4, 5) getrennte Verbindungskämme (12, 13, 14, 15) bilden, die in einer isolierenden Hülle befestigt sind, die mit einer Fläche versehen ist, von der aus die Lamellen (4, 5) auf zwei parallelen Leitungen, die diese Verbindungsebenen bilden, wobei die Länge der Lamellen (4, 5) der Kämme (12, 13, 14, 15), deren Konfiguration und deren relative Positionierung/Isolationsmittel in der Hülle so vorgesehen sind, dass die aus der isolierenden Hülle herausragenden Abschnitte der Lamellen (4, 5) gleich lang ist, wobei die Lamellen (4, 5) der beiden Überbrückungsebenen gleich beabstandet und versetzt sind, wobei zumindest die Lamellen (4) der Phasenkämme (12, 13, 14) seitlich zu den Schienen (16) versetzt sind und als eine Art Verzahnung Freiräume (17, 18, 19) zwischen ihnen freilassen,
**dadurch gekennzeichnet, dass**:
• eine Fläche der isolierenden Hülle, die sich von derjenigen unterscheidet, von der die Lamellen (4, 5) abstehen, Öffnungen zum Einsetzen (7, 8) und Führen einer Lasche (9) zum Verbinden eines Abzweigungsanschlusses (6) mit mindestens einer Öffnung (7) pro Phase und mindestens einer Öffnung (8) für den Neutralleiter aufweist, die Zugang zum entsprechenden Kamm (12, 13, 14, 15) ermöglicht und für jede Phase oder den Neutralleiter an den Freiräumen (17, 18, 19) der Verzahnung der anderen Phasen oder des Neutralleiters angeordnet ist; und
• die Mittel zum Positionieren der Kämme (12, 13, 14, 14, 15) in der Hülle, welche Pass-/Führungsmittel (21, 24, 25) für die Laschen (9) der Abzweigungsanschlüsse (6) aufweisen, um diese mit einer Phase oder dem Neutralleiter in Kontakt zu bringen und sie von den anderen Phasen oder dem Neutralleiter zu isolieren.

2. Überbrückungsvorrichtung nach dem vorherigen Anspruch,
**dadurch gekennzeichnet, dass**
die Öffnungen (7, 8) so positioniert sind, dass sie die Lasche in Kontakt mit einer Lamelle (4, 5) eines Phasenkamms (12, 13, 14) oder des Neutralleiterkamms (15) führen.

3. Überbrückungsvorrichtung nach dem vorhergehenden Anspruch,
**dadurch gekennzeichnet, dass**
die Öffnungen (7, 8) so angeordnet und dimensioniert sind, dass sie die auf einer Lamelle (4, 5) gleitende Lasche (9) zu einer überlagerten Endposition führen.

4. Überbrückungsvorrichtung nach einem der vorhergehenden Ansprüche,
**dadurch gekennzeichnet, dass**
sie Einschub- und Führungsöffnungen (7, 8) umfasst, die sich in den beiden Verbindungsebenen befinden, die in einem gleichen Abstand wie diejenigen angeordnet sind, deren Lamellen (4, 5) beabstandet sind, und die um einen Abstand versetzt sind, der identisch mit dem Versatz der Lamellen (4, 5) der beiden Verbindungsebenen ist.

5. Überbrückungsvorrichtung nach einem der vorhergehenden Ansprüche,
**dadurch gekennzeichnet, dass**
die Überbrückungskämme (12, 13, 14) einen L-förmigen Querschnitt in Höhe der Lamellen (4) aufweisen, wobei jede Lamelle (4) mit der Schiene (16) durch eine L-förmige Basis mit einer größeren Breite als die Lamelle (4) verbunden ist, wobei der zur Schiene parallele Abschnitt eine Verzahnung mit ihr bildet.

6. Überbrückungsvorrichtung nach einem der vorhergehenden Ansprüche,
**dadurch gekennzeichnet, dass**
die Mittel zum Positionieren der Phasenkämme (12, 13, 14) und des Neutralleiterkamms (15) mindestens für eine Phase oder den Neutralleiter mindestens ein Fenster (25) oder ein Führungsgehäuse (21) umfassen, das den Zugang zu jeweils einer Lamelle (4) ermöglicht.

7. Überbrückungsvorrichtung nach einem der Ansprüche 5 und 6,
**dadurch gekennzeichnet, dass**
mindestens ein Schlitz von mindestens einem Kamm (12, 14) einer der Phasen oder des Neutralleiters mit einem Fenster (24) zum Führen der Lasche (9) eines Abzweigungsanschlusses (6) versehen ist.

8. Überbrückungsvorrichtung nach den Ansprüchen 5 bis 7, die auf eine neutrale Dreiphasenschiene aufgebracht ist,
**dadurch gekennzeichnet, dass**:
• die drei Phasenkämme (12, 13, 14) im Querschnitt L-förmig sind; zwei der Schienen (16) auf einer Seite der Ebene der Lamellen (4) angeordnet sind;
• die dritte Schiene (16) auf der anderen Seite der Ebene angeordnet ist.

## Claims

1. A bridging device with two connection levels, a first level for lamellae (5) originating from a continuous conductor bar (16') connected to neutral, and a second level for lamellae originating from n, n being a whole natural number comprised between 1 and 3, continuous phase bars (16), equipped with lamellae (4) of spatial frequency n times less than that of the neutral lamellae (5) and following on from each other according to a regular pattern, said bars (16, 16') and their lamellae (4, 5) forming distinct connection combs (12, 13, 14, 15) fixed in an insulating sheath provided with a face beyond which the lamellae (4, 5) pass on two parallel lines constituting said connection levels, the length of the lamellae (4, 5) of the combs (12, 13, 14, 15), the configuration of these latter and their relative positioning/insulation means in the sheath being provided so that the portions of the lamellae (4, 5) passing beyond the insulating sheath are of equal length, the lamellae (4, 5) of the two bridging levels being distant by a same pitch and offset, at least the lamellae (4) of the phase combs (12, 13, 14) being displaced laterally with respect to the bars (16), arranging between them free spaces (17, 18, 19) in the manner of a crenellation,
**characterized in that**:
• a face of the insulating sheath distinct from that beyond which the lamellae (4, 5) pass comprises openings (7, 8) for insertion and for guiding of a connection tongue (9) of a derivation terminal (6) at a rate of at least one opening (7) per phase and of at least one opening (8) for the neutral, giving access to the corresponding comb (12, 13, 14, 15) and situated for each phase or the neutral at the level of free spaces (17, 18, 19) of the crenellation of the other phases or of the neutral; and
• the positioning means of the combs (12, 13, 14, 15) in the sheath have means (21, 24, 25) for passing/guiding of the tongues (9) of the derivation terminals (6) permitting them to be placed in contact with a phase or the neutral and to be insulated with respect to the other phases or to the neutral.

2. The bridging device according to the preceding claim, **characterized in that** the openings (7, 8) are positioned so as to guide the tongue in contact with a lamella (4, 5) of a phase comb (12, 13, 14) or of the neutral comb (15).

3. The bridging device according to the preceding claim, **characterized in that** the openings (7, 8) are located and dimensioned so as to guide the tongue (9) in a sliding manner on a lamella (4, 5) for the purpose of a final superposed positioning.

4. The bridging device according to any one of the preceding claims, **characterized in that** it comprises openings (7, 8) for insertion and guiding located at the two connection levels, distant by an identical pitch to that by which the lamellae (4, 5) are distant, and offset by an identical distance to the offsetting of the lamellae (4, 5) of the two connection levels.

5. The bridging device according to any one of the preceding claims, **characterized in that** the bridging combs (12, 13, 14) have an L-shaped section at the level of the lamellae (4), each lamella (4) being connected to the bar (16) by an L-shaped base having a width greater than the lamella (4) of which the portion parallel to the bar forms with the latter a crenellation.

6. The bridging device according to any one of the preceding claims, **characterized in that** the positioning means of the phase (12, 13, 14) and neutral (15) combs comprise, at least for one phase or the neutral, at least one window (25) or a guiding housing (21) each permitting access to a lamella (4).

7. The bridging device according to one of Claims 5 and 6, **characterized in that** at least one crenel of at least one comb (12, 14) of one of the phases or of the neutral is provided with a window (24) for guiding the tongue (9) of a derivation terminal (6).

8. The bridging device according to Claims 5 to 7 applied to a neutral three-phase bar, **characterized in that**:
- the three phase combs (12, 13, 14) are L-shaped in section;
- two of the bars (16) are arranged on one side of the plane of the lamellae (4);
- the third bar (16) is arranged on the other side of said plane.
